# EUROPÄISCHE PATENTANMELDUNG

(11) **EP 3 913 275 A1**
(43) Veröffentlichungstag der Anmeldung: **24.11.2021**
(21) Anmeldenummer: 21173682.2
(22) Anmeldetag: 12.05.2021
(51) Int. Cl.: F17C 9/02

(54) **BEREITSTELLUNG VON BRENNGAS FÜR EINE BRENNGASMASCHINE**

(30) Priorität: 19.05.2020 DE 102020113548
(71) Anmelder: TGE Marine Gas Engineering GmbH, 53175 Bonn (DE)
(72) Erfinder: Hambücker, Andreas, 53177 Bonn (DE)
(74) Vertreter: Eisenführ Speiser

(57) **Zusammenfassung**

Die Erfindung bezieht sich auf ein Verfahren zum Bereitstellen von Brenngas mit einem vorgegebenen Enddruck als Einspeisedruck für eine Brenngasmaschine mittels einer Lagerungs- und Speiseanlage für Flüssiggas, mit den folgenden Schritten: Fördern eines Flüssiggasstroms aus mindestens einem Flüssiggastank mittels einer Fördereinrichtung; Weiterfördern des Flüssiggasstroms als Einspeisestrom zu einer Enddruckpumpe; Aufdrücken des Einspeisestroms auf den Einspeisedruck der Enddruckpumpe; Aufdrücken des Einspeisestroms mittels der Enddruckpumpe auf den Einspeisedruck der Brenngasmaschine; und den weiteren Schritten: Anordnen einer weiteren Fördereinrichtung zwischen der (ersten) Fördereinrichtung, die den Flüssiggasstrom aus dem Flüssiggastank fördert, und der Enddruckpumpe, wobei der Einspeisedruck der weiteren Fördereinrichtung niedriger ist als der Einspeisedruck der Enddruckpumpe und der Ausspeisedruck dem Einspeisedruck der Enddruckpumpe entspricht; Aufdrücken des aus dem Flüssiggastank geförderten Flüssiggasstroms mittels der ersten Fördereinrichtung auf den Einspeisedruck der weiteren Fördereinrichtung; Einleiten eines Stroms aus Anlagen-BOG (Boil-Off-Gas) und/oder rückgeführtem Anlagen-Flüssiggas in den Einspeisestrom zu der weiteren Fördereinrichtung; Aufdrücken des Einspeisestroms mittels der weiteren Fördereinrichtung auf den Einspeisedruck der Enddruckpumpe. Die Erfindung bezieht sich auch auf eine Lagerungs- und Speiseanlage für Flüssiggas zu Durchführung des Verfahrens und auf ein Schiff, bei dem Brenngas für eine Brenngasmaschine mit dem Verfahren bereitgestellt wird.

## Beschreibung

Die Erfindung bezieht sich auf ein Verfahren zur Bereitstellung von Brenngas mit einem vorgegebenen Enddruck als Einspeisedruck für eine Brenngasmaschine mittels einer Lagerungs- und Speiseanlage für Flüssiggas, gemäß dem Oberbegriff von Anspruch 1. Die Erfindung bezieht sich auch auf eine solche Lagerungs -und Speiseanlage für Flüssiggas, gemäß dem Oberbegriff von Anspruch 8, sowie auf ein Schiff mit einer solchen Lagerungs -und Speiseanlage für Flüssiggas.

Bei der Bereitstellung von Brenngas für eine Brenngasmaschine, beispielsweise auf Schiffen für die Haupt- bzw. Antriebsmaschine, ist die Behandlung des sogenannten Boil-Off-Gases (BOG) ein zentrales Thema. Es entsteht in den Lagerungs- und Speiseanlagen für Flüssiggas (z. B. LNG oder Ethan) beispielsweise durch den Wärmeeintrag in die Flüssiggas- Lagertanks und durch Wärmeeintrag in die Speiseanlagen aufgrund von Rückführströmen und Pumpen.

Es sind mehrere Verfahren zur Behandlung des BOGs bekannt:
In Rückverflüssigungssystemen oder Chiller-units wird das BOG in gesonderten Kühleinrichtungen, z. B. in Verflüssigungsanlagen oder Flüssigkühlern, gekühlt. Für das Behandeln des BOGs werden solche Installationen aus Kosten- und Platzgründen im allgemeinen nicht berücksichtigt.

Meist wird das anfallende BOG durch Gasverbrauch in Niederdrucksystemen (ca. 5-9 barg Lieferdruck) oder in Mitteldrucksystemen (ca. 12-16 barg Lieferdruck) behandelt, neben der Möglichkeit, das BOG mit Druckaufbau zeitlich limitiert in den Flüssiggastanks zu lagern, bis eine Reduktion des Tankdrucks wieder möglich ist. Letzteres bieten nur sogenannte Typ-C-Tanks. Andere Tankkonzepte bieten diese Möglichkeit nicht bzw. nur in reduziertem Maße.

Falls in den verschiedenen Schiffsbetriebsvarianten genügend BOG-Abnahme durch die Generatoren (Niederdruckverbraucher) vorhanden ist, kann die anfallende BOG-Menge mit einem sogenannten BOG-Kompressorensystem verläßlich gehändelt werden, indem das BOG auf den erforderlichen Druck komprimiert und gekühlt wird und dann in den Generatoren zur Stromerzeugung abgenommen wird.

Bei einigen Schiffstypen übersteigt die anfallende BOG-Menge die zur Stromerzeugung erforderliche BOG-Menge. Dies tritt zum Beispiel bei großen Container-Schiffen auf, die mit großen Lagertanks mit ca. 5.000 m³ bis 20.000 m³ Gesamtlagervolumen ausgerüstet sind.

Zudem sind die Schiffe der neueren Generation hocheffizient und nutzen neben Wellengeneratoren auch andere Systeme, wie zum Beispiel Waste-Heat Recovery, die den über Generatoren erzeugten Strom bzw. den anfallenden BOG-Verbrauch der Generatoren weiter reduzieren und das Händeln des BOGs weiter erschweren. Bei diesen Applikationen bietet es sich an, das BOG in der Hauptmaschine des Schiffes zu verbrauchen. Der Gasverbrauch der Hauptmaschine ist in allen Fällen deutlich höher als das anfallende BOG. Ein Großteil der Schiffe ist mit 2-takter-Hauptmaschinen ausgestattet. Diese können mit Mitteldruckgasspeisedruck (ca. 12-16 barg) bis Hochdruckgasspeisedruck (250-400 barg) ausgeführt sein. Existierende Containerschiffe würden mit einer Hochdruckspeiseanlage ausgerüstet werden müssen, um eine Umstellung auf Gasbetrieb zu realisieren.

Bei Schiffen mit Mittelspeisedruck-Anforderung werden entsprechende BOG-Kompressoren eingesetzt, die das BOG gemäß der Anforderung der Hauptmaschine auf den erforderlichen Druck komprimieren und kühlen.

Bei Schiffen mit Hochdruckspeisedruck-Anforderung werden Hochdruckkompressoren installiert, die entweder das BOG vom Flüssiggastank direkt ansaugen oder vom Niederdruckniveau (5-9 barg) aus auf den erforderlichen Druck verdichten.

Beide Installationen sind kostenintensiv, wartungsintensiv, benötigen massive Unterstützungskonstruktionen und haben einen hohen Platzbedarf.

Da wie bereits erwähnt der Gasbedarf der Hauptmaschine die anfallende BOG-Menge bei weitem übersteigt, ist neben den BOG-Kompressoren zudem ein Gasspeisesystem vorgesehen, dass das Flüssiggas, das den Lagertanks entnommen wird, entsprechend den Anforderungen der Hauptmaschine konditioniert.

Bei Hochdruckspeisesystemen sind dies mehrzylindrige einstufige Kolbenpumpen. Beim Betrieb dieser Kolbenpumpen fallen kontinuierliche Kühlströme und Leckageströme an, die zum einen zusätzliches BOG in erheblicher Menge generieren und somit die Bilanz noch einmal verschlechtern und die zum anderen in die Lagertanks zurückgeführt werden.

Die Aufgabe der vorliegenden Erfindung liegt darin, Brenngas mit einem vorgegebenen Enddruck als Einspeisedruck für eine Brenngasmaschine wirtschaftlicher bereitzustellen.

Erfindungsgemäß wird diese Aufgabe bei einem Verfahren und bei einer Lagerungs- und Speiseanlage der eingangs genannten Art durch die kennzeichnenden Merkmale des Anspruchs 1 bzw. 8 gelöst.

Die Erfindung umfasst auch ein Schiff mit einer erfindungsgemäßen Bereitstellung von Brenngas für eine Brenngasmaschine.

Durch die erfindungsgemäßen Maßnahmen kann Brenngas für eine Brenngasmaschine, die einen relativ hohen Einspeisedruck aufweist - beispielsweise 10 barg und mehr -, mit erheblich reduziertem Aufwand hinsichtlich Aggregate, Montage und Wartung bereitgestellt werden. Durch die Anordnung einer weiteren Fördereinrichtung zwischen der ersten Fördereinrichtung, die Flüssiggas aus dem mindestens einen Flüssiggastank fördert, und der Enddruckpumpe und da anfallendes BOG und/oder Anlagen-Flüssiggas in den Einspeisestrom zu dieser weiteren Fördereinrichtung eingespeist werden, können das BOG und/oder das Anlagen-Flüssiggas ohne zusätzlichen Kompressor der Brenngasmaschine zugeführt werden. Hierdurch ergibt sich eine signifikante Kosteneinsparung sowie auch eine signifikante Reduzierung des Montageaufwandes und des Platzbedarfs. Zudem sind die Wartungskosten und der Energiebedarf gegenüber einer Ausführung mit Kompressor deutlich geringer. Bei Schiffen beispielsweise sinkt im gesamten Schiffskonzept die Komplexität, wenn die Anzahl der Gasverbraucher reduziert werden kann.

Vorzugsweise wird BOG aus dem mindestens einen Flüssiggastank als Anlagen-BOG in den Einspeisestrom zu der weiteren Fördereinrichtung eingeleitet. Hierdurch kann dieses BOG. äußerst wirtschaftlich zur Brenngasmaschine ausgespeist werden.

Aufgrund des geringen Aufwandes bietet sich die Erfindung insbesondere auch für Lagerungs- und Speiseanlagen an, bei denen die durch Wärmeeintrag in die Flüssiggastanks generierte BOG-Menge sehr gering ist, da die Flüssiggastanks vakuumisoliert sind, so dass der größte Teil des BOGs durch Wärmeeintrag in den übrigen Teilen der Anlage entsteht.

Wenn die Fördereinrichtungen und/oder die Enddruckpumpe mit Kühlströmen aus Flüssiggas gekühlt werden, werden in einer günstigen Ausgestaltung der Erfindung rückgeführte Kühlströme als rückgeführtes Anlagen-Flüssiggas in den Einspeisestrom zu der weiteren Fördereinrichtung eingeleitet. Mit diesen Maßnahmen wird die Wirtschaftlichkeit des erfindungsgemäßen Verfahrens bzw. der erfindungsgemäßen Lagerungs- und Speiseanlage weiter gesteigert, da diese rückgeführten Kühlströme auf sehr einfache Weise der Brenngasmaschine zugeführt werden können.

Dasselbe gilt auch für eine ebenfalls bevorzugte Ausführungsform der Erfindung, gemäß der die Flüssiggasleckage der Fördereinrichtungen und/oder der Enddruckpumpe als rückgeführtes Anlagen-Flüssiggas in den Einspeisestrom zu der weiteren Fördereinrichtung eingeleitet wird.

Die weitere Fördereinrichtung kann einstufig ausgeführt sein, sodass sie den Einspeisestrom in einer einzigen Stufe auf den Einspeisedruck der Enddruckpumpe aufdrückt.

Es ist aber auch daran gedacht, innerhalb der weiteren Fördereinrichtung den Einspeisestrom in mindestens zwei Stufen auf den Einspeisedruck der Enddruckpumpe aufzudrücken und das Anlagen-BOG und/oder das Anlagen-Flüssiggas in den Einspeisestrom zu einer der Stufen einzuleiten. Dies ermöglicht eine einfache Anpassung an vorgegebene Randbedingungen.

Vorzugsweise werden als Fördereinrichtungen Förderpumpen angeordnet. Förderpumpen können relativ einfach konstruiert sein und halten daher den Konstruktions- und Montageaufwand niedrig.

In einer günstigen Ausgestaltung der Erfindung werden beim Einleiten von Anlagen-BOG und/oder Anlagen-Flüssiggas in den Einspeisestrom zur weiteren Fördereinrichtung das Anlagen-BOG, das Anlagen-Flüssiggas und der Einspeisestrom miteinander gemischt. Hierdurch wird sichergestellt, dass der in die weitere Fördereinrichtung eintretende Einspeisestrom über seinen Querschnitt sehr homogen ist.

Eine erfindungsgemäße Lagerungs- und Speiseanlage für Flüssiggas weist bevorzugt einen Gas-Flüssigkeits-Abscheider auf, dessen Eingang mit dem Ausgang des Mischers in Strömungsverbindung steht und dessen Flüssigkeitsausgang mit der Saugseite der weiteren Fördereinrichtung in Strömungsverbindung steht und dessen Gasausgang mit einem Gasspeicher und/oder einem Gasverbraucher in Strömungsverbindung steht. Durch diese Maßnahmen wird die Effektivität der weiteren Fördereinrichtung erhöht, da in dem Einspeisestrom keine gasförmigen Bestandteile mehr enthalten sind.

Bei einem erfindungsgemäßen Schiff ist die Brenngasmaschine bevorzugt seine Haupt- bzw. Antriebsmaschine, beispielsweise mit Einspeisedrücken im Bereich von 12 bis 16 barg bis hinauf zu 250 bis 400 barg.

Die Erfindung wird nachfolgend anhand der Zeichnungen beispielshalber noch näher erläutert. Es zeigen:
- Figur 1: ein Fließbild für ein Ausführungsbeispiel einer erfindungsgemäßen Lagerungs- und Speiseanlage für Flüssiggas; und
- Figur 2: eine Detail-Darstellung der Behandlungseinheit aus Figur 1.

Das in den Figuren dargestellte Ausführungsbeispiel einer erfindungsgemäßen Lagerungs- und Speiseanlage 1 für Flüssiggas weist einen Flüssiggastank 2, eine erste Fördereinrichtung 3, eine Behandlungseinheit 4 für den einer Enddruckpumpe 5 zugeführten Einspeisestrom, wobei die Behandlungseinheit 4 eine weitere Fördereinrichtung 6 aufweist, die Enddruckpumpe 5, einen Brenngas-Anwärmer 7 sowie Zuleitungen 8 für Anlagen-BOG und Anlagen-Flüssiggas auf.

Im dargestellten Ausführungsbeispiel ist die erste Fördereinrichtung 3 in dem Flüssiggastank 2 angeordnet und als Förderpumpe ausgebildet, im dargestellten Fall als Tauchpumpe, die in das Flüssiggas 9 eingetaucht ist. Sie saugt das Flüssiggas 9 mit ihrer Saugseite 10 an. Ihre Druckseite 11 ist über eine Rohrleitung 12 an einen ersten Eingang 13 der Behandlungseinheit 4 angeschlossen. Diese Förderpumpe 3 ist dazu eingerichtet, das aus dem Flüssiggastank 2 geförderte Flüssiggas 9 auf den Einspeisedruck der weiteren Fördereinrichtung 6 aufzudrücken, wobei dieser Einspeisedruck niedriger ist als der Enddruck.

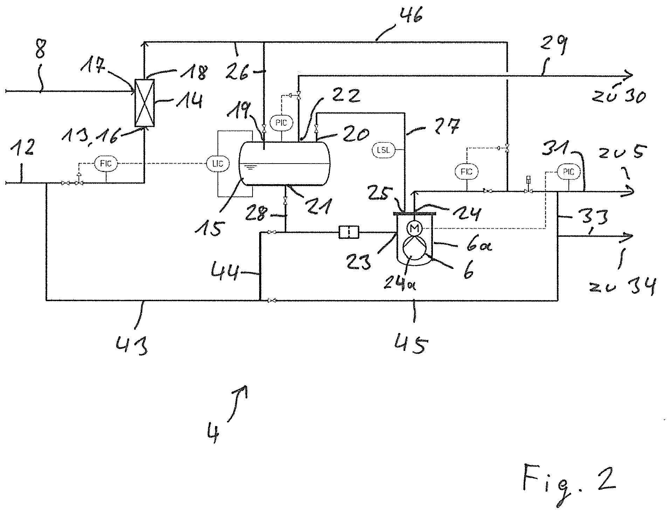

In Figur 2 ist die Behandlungseinheit 4 im Detail dargestellt. Sie weist einen statischen Mischer 14, einen Gas-Flüssigkeits-Abscheider 15 sowie einen Pumpenvorlagebehälter 6a mit der weiteren Fördereinrichtung 6 auf, die im dargestellten Ausführungsbeispiel ebenfalls eine Förderpumpe ist.

Der Mischer 14 weist einen ersten und einen zweiten Eingang 16, 17 sowie einen Ausgang 18 auf.

Der Gas-Flüssigkeits-Abscheider 15 weist einen ersten und einen zweiten Eingang 19, 20 sowie einen Flüssigkeitsausgang 21, d. h. einen Flüssiggasausgang, und einen Gasausgang 22 auf.

Der Pumpenvorlagebehälter 6a weist einen Flüssiggaseingang 23 und einen Flüssiggasausgang 25 auf.

An den ersten Eingang 16 des Mischers 14, der dem ersten Eingang 13 der Behandlungseinheit 4 entspricht, ist die von der Druckseite 11 der ersten Fördereinrichtung bzw. Förderpumpe 3 kommende Rohrleitung 12 angeschlossen. An den zweiten Eingang 17 des Mischers 14 ist eine Zuleitung 8 für Anlagen-BOG und/oder Anlagen-Flüssiggas angeschlossen. Der Ausgang 18 des Mischers 14 ist über eine Rohrleitung 26 an den ersten Eingang 19 des Gas-Flüssigkeits-Abscheiders 15 angeschlossen.

Der Flüssiggasausgang 21 des Gas-Flüssigkeits-Abscheiders 15 ist über eine Rohrleitung 28 an den Flüssiggaseingang 23 des Pumpenvorlagebehälters 6a angeschlossen. Der Flüssiggasausgang 25 des Pumpenvorlagebehälters 6a ist über eine Rohrleitung 27 an zweiten Eingang 20 des Gas-Flüssigkeits-Abscheiders 15 angeschlossen. Der Pumpenvorlagebehälter 6a ist mit Flüssiggas gefüllt, wobei die Rohrleitung 27 eine Ausgleichsleitung ist.

Der Gasausgang 22 des Gas-Flüssigkeits-Abscheiders 15 ist über eine Rohrleitung 29 mit einem Gasspeicher und/oder Gasverbraucher 30 verbunden.

Die weitere Fördereinrichtung bzw. Förderpumpe 6 ist in dem Pumpenvorlagebehälter 6a angeordnet. Sie ist als Tauchpumpe ausgebildet und in das Flüssiggas in dem Pumpenvorlagebehälter 6a eingetaucht. Diese weitere bzw. zweite Förderpumpe 6 saugt mit ihrer Saugseite 24a Flüssiggas aus dem Pumpenvorlagebehälter 6a an. Ihre Druckseite 24 ist über eine Rohrleitung 31 an die Saugseite 32 der Enddruckpumpe 5 angeschlossen. Die zweite Förderpumpe 6 ist dazu eingerichtet, das eingespeiste Flüssiggas auf den Einspeisedruck der Enddruckpumpe 5 aufzudrücken.

Stromaufwärts der Enddruckpumpe 5 zweigt von dieser Rohrleitung 31 eine Rohrleitung 33 zu einem Verdampfer 34 ab, der Gas für Gasverbraucher bereitstellt, deren Betriebsdruck geringer ist als der Enddruck, d. h. als der Ausspeisedruck der Enddruckpumpe 5.

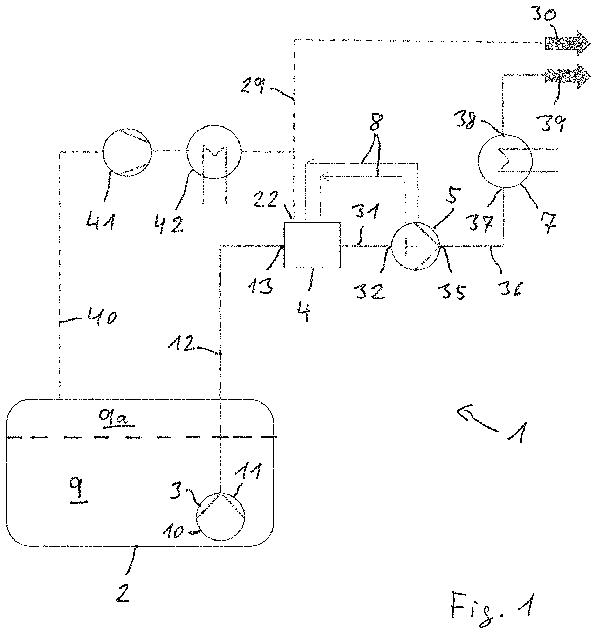

In Figur 1 ist dargestellt, dass die Druckseite 35 der Enddruckpumpe 5 über eine Rohrleitung 36 an den Eingang 37 des Brenngas-Anwärmers 7 angeschlossen ist, dessen Druckseite 38 mit dem Brenngaseingang der Brenngasmaschine 39 in Strömungsverbindung steht, im Fall eines Schiffes mit der Haupt- bzw. Antriebsmaschine.

In Figur 1 ist außerdem schematisch dargestellt, dass eine Rohrleitung 40 zum Abführen von BOG 9a aus dem Flüssiggastank 2 an diesen angeschlossen ist, einen BOG-Kompressor 41 und weiter stromabwärts einen Gaskühler 42 aufweist und in die Rohrleitung 29 mündet, die von dem Gasausgang 22 der Behandlungseinheit 4 zu dem Gasspeicher und/oder Gasverbraucher 30 führt.

Ferner sind in Figur 1 zwei Rücklaufleitungen 8 dargestellt, die von der Enddruckpumpe 5 zur Behandlungseinheit 4 zurückführen. In diesen Rücklaufleitungen 8 können Kühlströme und/oder Flüssiggasleckageströme zur Behandlungseinheit 4 zurückgeführt werden, d. h. dem Einspeisestrom zur zweiten Förderpumpe 6 zugeführt werden.

In Figur 2 sind noch Rohrleitungen 43, 44, 45, 46 dargestellt.

Die Rohrleitung 44 zweigt von der Rohrleitung 28 ab, die sich vom Flüssigkeitsausgang 21 des Gas-Flüssigkeits-Abscheiders 15 zum Flüssiggaseingang 23 des Pumpenvorlagebehälters 6a erstreckt.

Die Rohrleitung 45 zweigt von den Rohrleitungen 31, 33 ab, die sich von der Druckseite 24 der zweiten Förderpumpe 6 zu der Enddruckpumpe 5 und dem Verdampfer 34 erstrecken, und verläuft an dem Pumpenvorlagebehälter 6a und der zweiten Förderpumpe 6 vorbei.

Beide Rohrleitungen 44, 45 vereinigen sich zu der Rohrleitung 43, die an dem Gas-Flüssigkeits-Abscheider 15 und an dem Mischer 14 vorbeiführt und in die Rohrleitung 12 mündet, die sich von der ersten Förderpumpe 3 zum Mischer 14 erstreckt.

Die Rohrleitung 46 zweigt ebenfalls von den Rohrleitungen 31, 33 ab, die sich von der Druckseite 24 der zweiten Förderpumpe 6 zu der Enddruckpumpe 5 und dem Verdampfer 34 erstrecken. Diese Rohrleitung 46 verläuft an dem Pumpenvorlagebehälter 6a und der zweiten Förderpumpe 6 vorbei und mündet in die Rohrleitung 26, die sich von dem Ausgang 18 des Mischers 14 zu dem ersten Eingang 19 des Gas-Flüssigkeits-Abscheiders 15 erstreckt.

Nachfolgend wird das erfindungsgemäße Verfahren anhand der in den beiden Figuren dargestellten Lagerungs- und Speiseanlage 1 für Flüssiggas beschrieben, wobei der Mischer 14 und der Gas-Flüssigkeits-Abscheider 15 lediglich zu einer bevorzugten Ausführungsform gehören:
Mit der ersten Förderpumpe 3 wird Flüssiggas 9 aus dem Flüssiggastank 2 gefördert, auf den Einspeisedruck der zweiten Förderpumpe 6 aufgedrückt und dem ersten Eingang 16 des Mischers 14 zugeführt.

Dem zweiten Eingang 17 des Mischers 14 werden in der Anlage anfallende BOG-Ströme, Leckageströme und/oder Kühlströme als Rücklaufströme über Zuleitungen 8 zugeführt. BOG aus dem Flüssiggastank 2 kann Gasverbrauchern auch direkt zugeführt werden.

In dem Mischer 14 werden die Rücklaufströme aus den Zuleitungen 8 und das aus dem Flüssiggastank 2 geförderte Flüssiggas 9 miteinander gemischt und dann dem Gas-Flüssigkeits-Abscheider 15 zugeführt.

Das in dem Gas-Flüssigkeits-Abscheider 15 abgeschiedene Flüssiggas wird der weiteren Förderpumpe 6 zugeführt, die das eingespeiste Flüssiggas auf den Einspeisedruck der Enddruckpumpe 5 aufdrückt.

Der Flüssiggasstrom wird nun als Einspeisestrom der Enddruckpumpe 5 zugeführt, die das eingespeiste Flüssiggas auf den Einspeisedruck der Brenngasmaschine 39 aufdrückt.

## Patentansprüche

1. Verfahren zum Bereitstellen von Brenngas mit einem vorgegebenen Enddruck als Einspeisedruck für eine Brenngasmaschine mittels einer Lagerungs- und Speiseanlage für Flüssiggas, mit den folgenden Schritten:
Fördern eines Flüssiggasstroms aus mindestens einem Flüssiggastank mittels einer Fördereinrichtung;
Weiterfördern des Flüssiggasstroms als Einspeisestrom zu einer Enddruckpumpe;
Aufdrücken des Einspeisestroms auf den Einspeisedruck der Enddruckpumpe;
Aufdrücken des Einspeisestroms mittels der Enddruckpumpe auf den Einspeisedruck der Brenngasmaschine;
**gekennzeichnet durch** folgende Schritte:
Anordnen einer weiteren Fördereinrichtung (6) zwischen der (ersten) Fördereinrichtung (3), die den Flüssiggasstrom (9) aus dem mindestens einen Flüssiggastank (2) fördert, und der Enddruckpumpe (5), wobei der Einspeisedruck der weiteren Fördereinrichtung (6) niedriger ist als der Einspeisedruck der Enddruckpumpe (5) und der Ausspeisedruck dem Einspeisedruck der Enddruckpumpe (5) entspricht;
Aufdrücken des aus dem mindestens einen Flüssiggastank (2) geförderten Flüssiggasstroms (9) mittels der ersten Fördereinrichtung (3) auf den Einspeisedruck der weiteren Fördereinrichtung (6);
Einleiten eines Stroms (8) aus Anlagen-BOG (Boil-Off-Gas) und/oder rückgeführtem Anlagen-Flüssiggas in den Einspeisestrom zu der weiteren Fördereinrichtung (6); und
Aufdrücken des Einspeisestroms mittels der weiteren Fördereinrichtung (6) auf den Einspeisedruck der Enddruckpumpe (5).

2. Verfahren nach Anspruch 1, **dadurch gekennzeichnet, dass** BOG (9a) aus dem mindestens einen Flüssiggastank (2) als Anlagen-BOG in den Einspeisestrom zu der weiteren Fördereinrichtung (6) eingeleitet wird.

3. Verfahren nach Anspruch 1 oder 2, **dadurch gekennzeichnet, dass** die Fördereinrichtungen (3, 6) und/oder die Enddruckpumpe (5) mit Kühlströmen aus Flüssiggas gekühlt werden und rückgeführte Kühlströme als rückgeführtes Anlagen-Flüssiggas in den Einspeisestrom zu der weiteren Fördereinrichtung (6) eingeleitet wird.

4. Verfahren nach einem der Ansprüche 1 bis 3, **dadurch gekennzeichnet, dass** die Flüssiggasleckage der Fördereinrichtungen (3, 6) und/oder der Enddruckpumpe (5) als rückgeführtes Anlagen-Flüssiggas in den Einspeisestrom zu der weiteren Fördereinrichtung (6) eingeleitet wird.

5. Verfahren nach einem der Ansprüche 1 bis 4, **dadurch gekennzeichnet, dass** innerhalb der weiteren Fördereinrichtung (6) der Einspeisestrom in mindestens zwei Stufen auf den Einspeisedruck der Enddruckpumpe (5) aufgedrückt wird und das Anlagen-BOG und/oder das Anlagen-Flüssiggas in den Einspeisestrom zu einer der Stufen eingeleitet wird.

6. Verfahren nach einem der Ansprüche 1 bis 5, **dadurch gekennzeichnet, dass** als Fördereinrichtungen (3, 6) Förderpumpen angeordnet werden.

7. Verfahren nach einem der Ansprüche 1 bis 6, **dadurch gekennzeichnet, dass** beim Einleiten von Anlagen-BOG und/oder Anlagen-Flüssiggas in den Einspeisestrom zur weiteren Fördereinrichtung (6) das Anlagen-BOG, das Anlagen-Flüssiggas und der Einspeisestrom miteinander gemischt werden.

8. Lagerungs- und Speiseanlage für Flüssiggas zur Durchführung des Verfahrens nach einem der Ansprüche 1 bis 7, mit
mindestens einem Flüssiggastank;
einer Fördereinrichtung, deren Saugseite mit dem mindestens einen Flüssiggastank in Strömungsverbindung steht, um aus diesem einen Flüssiggasstrom zu fördern;
einer Enddruckpumpe, deren Saugseite mit der Druckseite der Fördereinrichtung in Strömungsverbindung steht und deren Druckseite mit dem Brenngaseinlass der Brenngasmaschine in Strömungsverbindung steht, wobei die Enddruckpumpe dazu eingerichtet ist, den Flüssiggasstrom auf den Einspeisedruck der Brenngasmaschine aufzudrücken;
**gekennzeichnet durch**
eine weitere Fördereinrichtung (6), deren Saugseite mit der Druckseite (11) der (ersten) Fördereinrichtung (3), die den Flüssiggasstrom (9) aus dem mindestens einen Flüssiggastank (2) fördert, in Strömungsverbindung steht und deren Druckseite mit der Saugseite der Enddruckpumpe (5) in Strömungsverbindung steht, wobei der Einspeisedruck der weiteren Fördereinrichtung (6) niedriger ist als der Einspeisedruck der Enddruckpumpe (5) und der Ausspeisedruck dem Einspeisedruck der Enddruckpumpe (5) entspricht und wobei die erste Fördereinrichtung (3) dazu eingerichtet ist, den aus dem mindestens einen Flüssiggastank (2) geförderten Flüssiggasstrom (9) auf den Einspeisedruck der weiteren Fördereinrichtung (6) aufzudrücken;
eine Zuleitung (8) für Anlagen-BOG und/oder Anlagen-Flüssiggas, die in den Einspeisestrom zu der weiteren Fördereinrichtung (6) mündet; und
wobei die weitere Fördereinrichtung (6) dazu eingerichtet ist, den Einspeisestrom auf den Einspeisedruck der Enddruckpumpe (5) aufzudrücken.

9. Anlage nach Anspruch 8, **gekennzeichnet durch** eine Rohrleitung (40) zum Abführen von BOG (9a) aus dem mindestens einen Flüssiggastank (2), die mit der Zuleitung (8) für Anlagen-BOG und/oder Anlagen-Flüssiggas in Strömungsverbindung steht.

10. Anlage nach Anspruch 8 oder 9, **dadurch gekennzeichnet, dass** die Fördereinrichtungen (3, 6) und/oder die Enddruckpumpe (5) Kühlleitungen für Kühlströme aus Flüssiggas aufweisen und mindestens eine Rückführleitung für diese Kühlströme mit der Zuleitung (8) für Anlagen-BOG und/oder Anlagen-Flüssiggas in Strömungsverbindung steht

11. Anlage nach einem der Ansprüche 8 bis 10, **dadurch gekennzeichnet, dass** die Fördereinrichtungen (3 ,6) und/oder die Enddruckpumpe (5) mindestens eine Rückführleitung für Flüssiggasleckage aufweisen, die mit der Zuleitung (8) für Anlagen-BOG und/oder Anlagen-Flüssiggas in Strömungsverbindung steht

12. Anlage nach einem der Ansprüche 8 bis 11, **dadurch gekennzeichnet, dass** die weitere Fördereinrichtung (6) mindestens zwei Stufen aufweist, um den Einspeisestrom auf den Einspeisedruck der Enddruckpumpe (5) aufzudrücken und die Zuleitung (8) für Anlagen-BOG und/oder Anlagen-Flüssiggas in den Einspeisestrom zu einer der Stufen mündet.

13. Anlage nach einem der Ansprüche 8 bis 12, **dadurch gekennzeichnet, dass** die Fördereinrichtungen (3, 6) Förderpumpen sind.

14. Anlage nach einem der Ansprüche 8 bis 13, **gekennzeichnet durch** einen Mischer (14) mit einem ersten Eingang (16), der mit der Druckseite (11) der ersten Fördereinrichtung (3) in Strömungsverbindung steht, einem zweiten Eingang (17), an den die Zuleitung (8) für Anlagen-BOG und/oder Anlagen-Flüssiggas angeschlossen ist, und mit einem Ausgang (18), der mit der Saugseite der weiteren Fördereinrichtung (6) in Strömungsverbindung steht.

15. Anlage nach Anspruch 14, **gekennzeichnet durch** einen Gas-Flüssigkeits-Abscheider (15), dessen Eingang (19) mit dem Ausgang (18) des Mischers (14) in Strömungsverbindung steht und dessen Flüssigkeitsausgang (21) mit der Saugseite (24a) der weiteren Fördereinrichtung (6) in Strömungsverbindung steht und dessen Gasausgang (22) mit einem Gasspeicher und/oder einem Gasverbraucher (30) in Strömungsverbindung steht.

16. Schiff mit einer Brenngasmaschine, für die Brenngas mit dem Verfahren nach einem der Ansprüche 1 bis 8 bereitgestellt wird.

17. Schiff nach Anspruch 17, mit einer Anlage nach einem der Ansprüche 8 bis 15.

18. Schiff nach Anspruch 16 oder 17, **dadurch gekennzeichnet, dass** die Brenngasmaschine die Hauptmaschine (39) des Schiffes ist.
